# FASCICULE DE BREVET EUROPEEN

(11) **EP 1 034 460 B1**
(45) Date de publication et mention de la délivrance du brevet: **12.09.2001**
(21) Numéro de dépôt: 98952827.8
(22) Date de dépôt: 30.10.1998
(51) Int. Cl.: G05B 19/042

(54) **APPAREIL ELECTRIQUE A FONCTION PARAMETRABLE A COUT REDUIT**
PREISWERTES ELEKTRISCHES GERÄT MIT PARAMETRIERBARER FUNKTION
ELECTRICAL APPLIANCE WITH PARAMETERABLE FUNCTION AT REDUCED COST

(30) Priorité: 28.11.1997 FR 9715011
(43) Date de publication de la demande: 13.09.2000
(73) Titulaire: CROUZET Automatismes, 26000 Valence (FR)
(72) Inventeur: MARIE, Jean-Louis, Thomson-CSF Prop.Ind. Dépt.Pro., F-94117 Arcueil Arcueil (FR)
(74) Mandataire: Simonnet, Christine
(86) Numéro de dépôt international: FR9802331
(87) Numéro de publication internationale: WO9928796

(56) Documents cités:
- EP-A- 0 356 652
- EP-A- 0 432 138
- EP-A- 0 503 265
- EP-A- 0 542 599
- DE-A- 19 620 575
- GB-A- 2 069 192
- US-A- 4 342 271
- US-A- 4 420 669
- US-A- 4 801 854
- US-A- 5 574 350

## Description

La présente invention est relative à un appareil électrique à fonction paramétrable à coût réduit.

Un grand nombre d'appareils électriques possèdent une fonction paramétrable, ce qui signifie que l'utilisateur de l'appareil peut attribuer à un paramètre une valeur choisie parmi plusieurs valeurs possibles et que l'appareil tient compte de cette valeur dans son fonctionnement. L'appareil dispose alors généralement d'un ou plusieurs organes d'actionnement que l'utilisateur peut déplacer de manière à lui faire prendre une position discrète choisie parmi plusieurs. L'organe d'actionnement peut être un bouton de commande à déplacement rotatif ou linéaire, actionnable manuellement, soit directement soit, pour les boutons de très petite dimension, par l'intermédiaire d'un petit tournevis ; le bouton de commande est accessible à l'utilisateur de l'extérieur de l'enveloppe de l'appareil et les différentes positions discrètes qu'il peut prendre sont repérées sur l'enveloppe de l'appareil. Ainsi la demande européenne EP-A-0 503 265 décrit un appareil électrique correspondant au préambule de la revendication 1.

D'autre part, dans une minuterie, par exemple, les fonctions paramétrables peuvent être la durée de la temporisation ou un mode opératoire. La gamme de valeurs de la temporisation peut, par exemple, être comprise entre 0,06 seconde et 30 heures. Le mode opératoire est relatif au fonctionnement du ou des relais que la minuterie contient. Plusieurs modes opératoires existent et parmi les plus utilisés on trouve le retard à la mise sous tension ou son complémentaire. Dans le premier mode, la temporisation débute à la mise sous tension de la minuterie et le relais change d'état en fin de temporisation et dans le second mode, le relais change d'état à la mise sous tension et conserve cet état pendant toute la durée de la temporisation avant de revenir à son état original en fin de temporisation.

L'attribution d'une valeur à un paramètre se fait soit grâce à un commutateur à plusieurs positions, pour définir par exemple un mode opératoire ou une gamme de valeurs d'un paramètre (gamme de durées pour une minuterie), soit par l'intermédiaire d'un potentiomètre de réglage fin pour définir une valeur précise d'un paramètre (réglage de durée dans la gamme choisie).

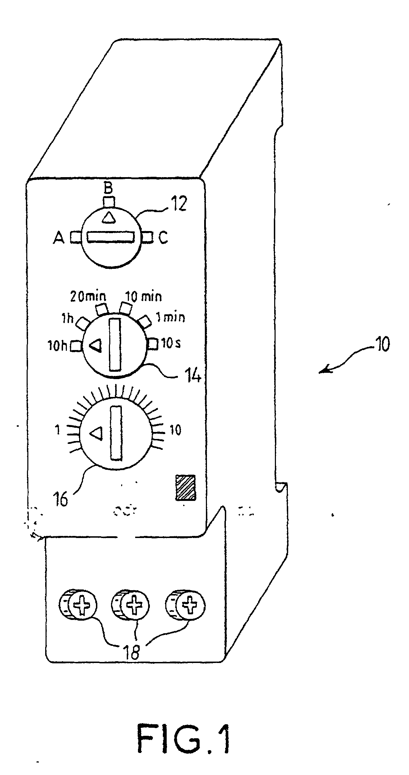

Par exemple, on peut imaginer une minuterie à trois modes opératoires, six gammes de durées, et un réglage fin dans chaque gamme de durée. Une telle minuterie est représentée sur la figure 1 (référence 10). Si elle était réalisée selon les principes de la technique connue, sa face avant porterait trois boutons de commande :
- le bouton supérieur 12 actionnerait un commutateur à trois positions permettant de choisir l'un de trois modes de fonctionnement possibles repérés par les lettres A, B, et C ;
- le bouton central 14 actionnerait un commutateur à six positions permettant de définir six gammes de durées possibles, repérées sur le boîtier par des indications représentant (par exemple) la valeur maximale de durée possible pour chaque gamme ;
- le bouton inférieur 16 actionnerait un potentiomètre de réglage fin, gradué de 1 à 10 (par exemple), permettant un réglage continu de la durée à l'intérieur de la gamme sélectionnée par le bouton 14.

Les orifices 18 à la base de la face avant de la minuterie permettent l'accès à des vis de serrage de fils électriques par lesquels la minuterie peut être raccordée à une installation électrique dans laquelle elle assure sa fonction.

Les commutateurs qui sélectionnent les gammes de paramètres ou les modes opératoires peuvent être coûteux, surtout s'ils doivent posséder un nombre important de positions. Ils sont en général agencés pour fournir directement sous forme binaire un signal numérique de commande des circuits électroniques qui servent à établir le fonctionnement de la minuterie. Un commutateur ayant un nombre de positions N strictement inférieur à 2^{p} fournit un signal numérique de p bits. Plus N est grand, plus p doit être grand et plus le commutateur est coûteux.

Ceci est d'autant plus vrai si les commutateurs doivent être miniaturisés. Typiquement, la largeur de la minuterie représentée sur la figure 1 pourrait être inférieure à 2 centimètres, et les boutons de commande 12, 14, et 16, ainsi que les commutateurs et potentiomètre qui sont derrière les boutons, ne dépassent pas un centimètre de diamètre.

D'autre part, plus le nombre N de positions du commutateur est grand, plus le circuit électronique (de type microcontrôleur) qui assure le fonctionnement de l'appareil risque d'être coûteux, du fait que ce circuit doit posséder p entrées réservées à la liaison avec le commutateur.

L'invention vise à réduire ces inconvénients tout. en faisant en sorte que l'utilisateur ait une perception pratiquement inchangée du fonctionnement de l'appareil.

Pour y parvenir, la présente invention propose un appareil électrique tel que défini dans la revendication 1.

Ainsi, selon l'invention, le commutateur de sélection de paramètre, de gamme de paramètres, ou de mode opératoire, est physiquement remplacé par un potentiomètre à indexation. Ce potentiomètre, alimenté par une tension, délivre un signal analogique, et c'est dans l'électronique de l'appareil que ce signal est converti en une valeur numérique (celle qui dans la technique antérieure était délivrée par un commutateur) représentant l'index sur lequel est positionné l'organe d'actionnement du potentiomètre. On se sert donc de la variation de résistance du potentiomètre pour déterminer la position indexée sur laquelle l'organe d'actionnement a été placé. On notera que la conversion analogique-numérique peut faire partie du microcontrôleur qui gère l'ensemble du fonctionnement de l'appareil, de sorte qu'une seule entrée de microcontrôleur est alors nécessaire pour assurer la liaison avec le potentiomètre quel que soit le nombre N de positions indexées que peut prendre l'organe d'actionnement du potentiomètre.

Le potentiomètre, même pourvu de moyens d'indexation à crans, est moins coûteux qu'un commutateur dès lors que le nombre de positions indexées dépasse trois au quatre.

L'utilisateur ne perçoit pas de différence par rapport aux appareils qu'il connaît habituellement : les boutons de commande restent identiques et le marquage des positions peut rester inchangé; la sensation de tourner un commutateur subsiste grâce aux crans des moyens d'indexation.

Si le potentiomètre est suffisamment précis et linéaire, et s'il est alimenté par un tension suffisamment précise, les moyens de conversion analogique-numérique et d'interprétation peuvent comporter un simple convertisseur analogique-numérique qui reçoit la tension analogique et qui délivre directement le signal numérique représentatif de la position de l'organe d'actionnement.

Si le potentiomètre est plus bas de gamme, et en particulier s'il n'est pas linéaire ou pas suffisamment linéaire (alors qu'on souhaite répartir très régulièrement les positions indexées), les moyens de conversion analogique-numérique et d'interprétation peuvent comporter non seulement un convertisseur analogique-numérique qui reçoit la tension analogique et qui délivre un signal numérique intermédiaire représentant directement la position d'un curseur du potentiomètre, mais aussi un dispositif de décodage qui reçoit ce signal numérique intermédiaire et qui le transpose en un signal numérique représentatif d'une position d'organe d'actionnement parmi N positons indexéns. Dans ce cas, on comprendra que le signal numérique intermédiaire peut comporter m bits, avec m supérieur au nombre p de bits définissant une position parmi N.

On peut envisager, pour simplifier la réalisation, que les moyens d'indexation à cran fassent partie du potentiomètre.

Pour diminuer les conséquences de l'incertitude sur la position exacte du curseur par rapport à la piste résistive, il est possible que la piste résistive se présente sous forme de plages résistives discontinues séparées par des plages conductrices.

Si l'appareil comporte plusieurs potentiomètres, il est préférable de prévoir un multiplexeur inséré entre les potentiomètres et les moyens de conversion analogique-numérique et d'interprétation, ce qui permet de ne pas multiplier le nombre de convertisseurs analogiques-numériques.

Au point de vue mécanique, les moyens d'indexation peuvent comporter un premier moyen d'indexation solidaire de l'organe d'actionnement et un second moyen d'indexation porté par une enveloppe de l'appareil.

Afin que le passage d'une position discrète à une autre se fasse de manière franche et fiable il est préférable que la coopération entre les moyens d'indexation soit de type élastique, c'est-à-dire qu'une certaine force de rappel oblige l'organe d'actionnement à se stabiliser sur une des positions indexées, sans rester entre deux positions.

L'un des deux moyens d'indexation peut comporter au moins un ergot et le second moyen d'indexation plusieurs crans, l'ergot venant se loger dans l'un des crans. Ou inversement, il y a plusieurs d'ergots et un cran, le cran venant s'appliquer sur un des ergots.

D'autres caractéristiques et avantages de l'invention apparaîtront à la lecture de la description suivante illustrée par les figures annexées qui représentent :
- la figure 1, une minuterie dans laquelle peut être incorporée
- l'invention ;
- la figure 2, une coupe latérale de l'enveloppe de l'appareil, montrant l'incorporation d'un potentiomètre à indexation dans la face avant de cette enveloppe ;
- les figures 3a, 3b, 3c, respectivement en vue perspective, en vue arrière (de l'intérieur de l'enveloppe), et en coupe longitudinale, l'organe d'actionnement ;
- la figure 4, une coupe horizontale montrant l'ouverture dans la paroi frontale de l'appareil, ouverture dans laquelle peuvent être formés des moyens d'indexation de la commande du potentiomètre ;
- la figure 5, une vue par l'arrière de la paroi frontale de l'enveloppe de l'appareil, montrant également ces moyens d'indexation ;
- la figure 6, une variante de réalisation des moyens d'indexation ;
- la figure 7, un organe d'actionnement indexé, de type linéaire ;
- la figure 8, un schéma électrique expliquant le fonctionnement électrique de l'appareil ;
- la figure 9, une variante de schéma électrique utilisant un multiplexeur pour plusieurs potentiomètres indexés ;
- la figure 10, schématiquement un potentiomètre avec piste résistive formée de plages résistives discontinues ;
- la figure 11, une courbe illustrant la variation relative de résistance en fonction de la position du curseur du potentiomètre de la figure 10;
- la figure 12, une vue éclatée d'un potentiomètre incluant les moyens d'indexation à cran.

Ces figures ne représentent que des exemples de réalisation de l'appareil selon l'invention, d'autres variantes sont envisageables sans sortir du cadre de l'invention. Ces figures ne sont pas à la même échelle pour des raisons de clarté.

Pour simplifier, l'invention sera décrite à propos d'une minuterie telle que celle qui a été décrite à propos de la figure 1, étant entendu que des appareils remplissant d'autres fonctions paramétrables peuvent utiliser l'invention avec profit.

L'apparence extérieure et les fonctionnalités de la minuterie peuvent être exactement celles qui ont déjà été décrites à propos de la figure 1, c'est-à-dire, dans cet exemple, trois modes opératoires possibles, six gammes de durée, et un réglage continu de durée dans une gamme sélectionnée. Mais au lieu que les boutons de commande 12 et 14 soient des organes d'actionnement de commutateurs, ils deviennent des organes de commande de potentiomètres à crans. Le bouton de commande 16 reste l'organe d'actionnement d'un potentiomètre de réglage continu.

Avant d'exposer le principe de fonctionnement électrique de la commande par potentiomètres à crans, on va donner un exemple de constitution mécanique possible pour ces potentiomètres, tels qu'ils sont incorporés à l'appareil. On comprendra que l'indexation du potentiomètre peut être réalisée sur le potentiomètre lui-même ou sur son organe d'actionnement, et c'est cette dernière solution qui va être décrite plus précisément. Elle permet d'utiliser d'une part un potentiomètre peu coûteux et d'autre part un organe d'actionnement indexé qui serait utilisable indifféremment pour un commutateur (solution classique) ou pour un potentiomètre (solution selon l'invention).

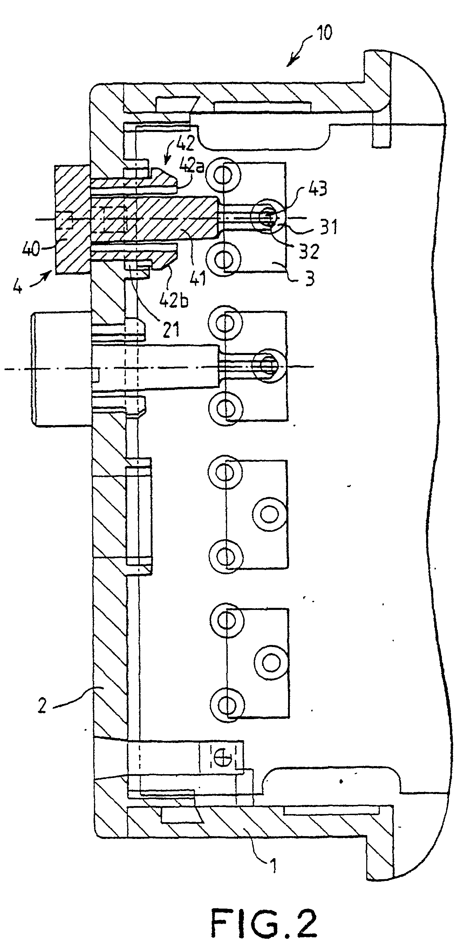

La figure 2 représente une coupe latérale de l'appareil, avec au moins un potentiomètre et son organe de commande à indexation.

L'appareil 10 comporte une enveloppe 1 avec une paroi avant 2, un potentiomètre 3 placé à l'intérieur de l'enveloppe, et un organe d'actionnement 4 du potentiomètre 3, accessible de l'extérieur de l'enveloppe 1 pour qu'un opérateur puisse le manipuler. L'organe d'actionnement 4 est situé sur la face avant 2 mais d'autres positions seraient envisageables. Il peut faire saillie par rapport à la face avant, accessible alors directement à la main, ou être légèrement en retrait derrière la face avant, accessible alors par un tournevis.

L'organe d'actionnement 4 comporte une première partie 40 en forme de bouton cylindrique actionnable de l'extérieur de l'enveloppe 1 et cette première partie 40 se prolonge par une seconde partie 41 en forme de tige qui se projette à l'intérieur de l'enveloppe 1 vers le potentiomètre 3.

La tige 41 se termine par une extrémité 43 qui est destinée à actionner le curseur 31 du potentiomètre 3. L'extrémité 43 de la tige 41 peut être cruciforme, plate ou à pans et pénétrer dans un orifice 32 de géométrie appropriée du curseur 31 du potentiomètre, de manière que la rotation du bouton 40 entraîne la rotation du curseur. Le détail du potentiomètre n'est pas représenté étant donné qu'il peut s'agir de n'importe quel type de potentiomètre, y compris un potentiomètre de très basse qualité donc de très faible coût Typiquement, on utilisera un simple potentiomètre à piste résistive annulaire continue, sur laquelle vient frotter un curseur mobile en rotation.

L'enveloppe 1 de l'appareil possède une ouverture 21, visible sur la figure 2, pour laisser passer la tige 41. Des moyens d'indexation peuvent être ménagés dans cette ouverture comme on va le voir.

L'organe d'actionnement 4 qui passe à travers l'ouverture 21 est de préférence équipé de moyens d'encliquetage 42 dans l'enveloppe 1. Ces moyens d'encliquetage 42 comportent par exemple une ou plusieurs pattes 42a élastiques se terminant chacune par un élément en saillie 42, par exemple en forme d'ailette, pour assurer une immobilisation en translation de l'organe d'actionnement 4 lorsqu'il a été inséré dans l'ouverture 21.

Dans l'exemple décrit, les moyens d'encliquetage 42a, 42b sont solidaires du bouton 40 mais on aurait pu envisager. qu'ils soient solidaires de la tige 41.

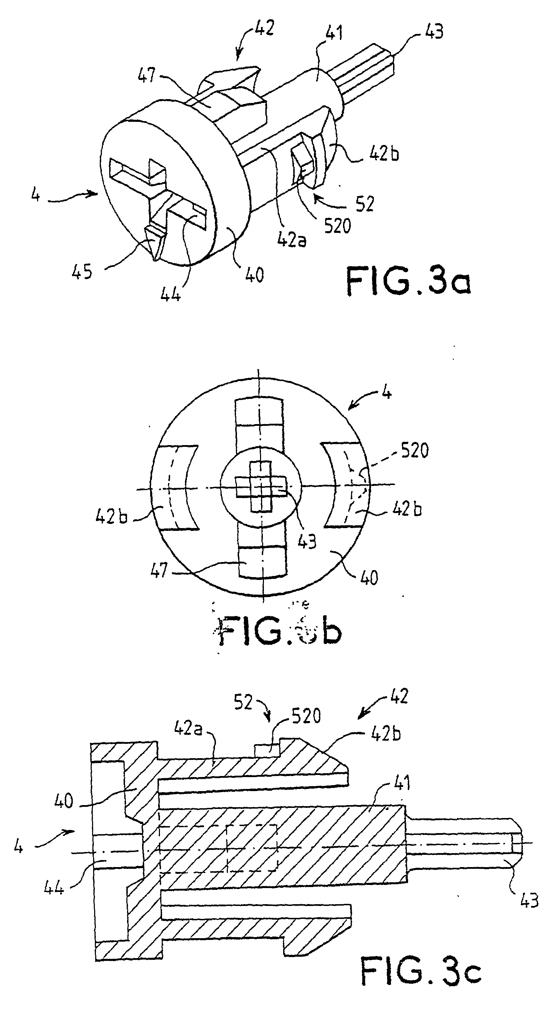

Sur les figures 3a, 3b, et 3c, on a représenté plus en détail , respectivement en perspective, en vue arrière, et en coupe longitudinale, la constitution de l'organe d'actionnement 4 avec les éléments déjà décrits : bouton cylindrique 40, tige 41, moyens d'encliquetage 42, extrémité 43 d'actionnement de curseur. On y voit aussi des pattes fixes 47 de même diamètre que le diamètre intérieur de l'ouverture 21, pour assurer le maintien, le guidage et la rotation du bouton dans l'ouverture 21.

Le bouton 40 peut comporter en outre des fentes 44 pour pouvoir être déplacé de manière précise à l'aide d'un tournevis. Dans certains appareils électriques, le bouton 40 sera relativement petit, par exemple moins d'un centimètre de diamètre et son actionnement en le saisissant avec les doigts n'est pas aisé.

Le bouton 40 peut aussi porter un repère 45, tandis que l'enveloppe 1 porte autant de marques que de positions discrètes de l'organe d'actionnement 4 et donc que de valeurs désirées du paramètre sélectionné par le bouton (ici : des modes opératoires ou des gammes de durée). Le repère 45 se trouvant face à une marque de l'enveloppe permet de visualiser aisément la valeur sélectionnée pour le paramètre.

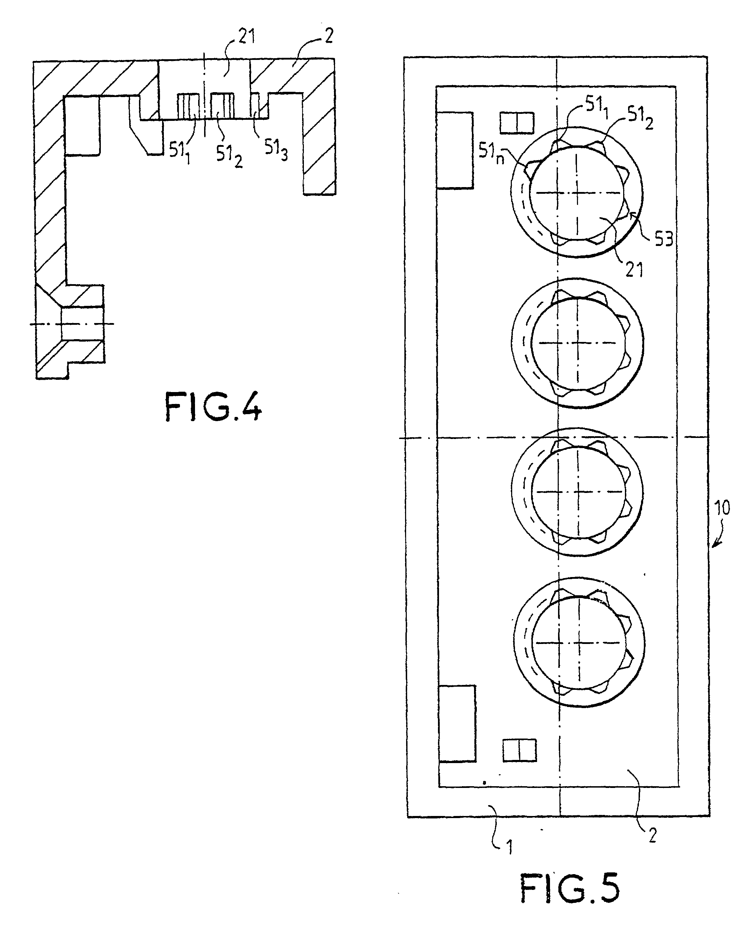

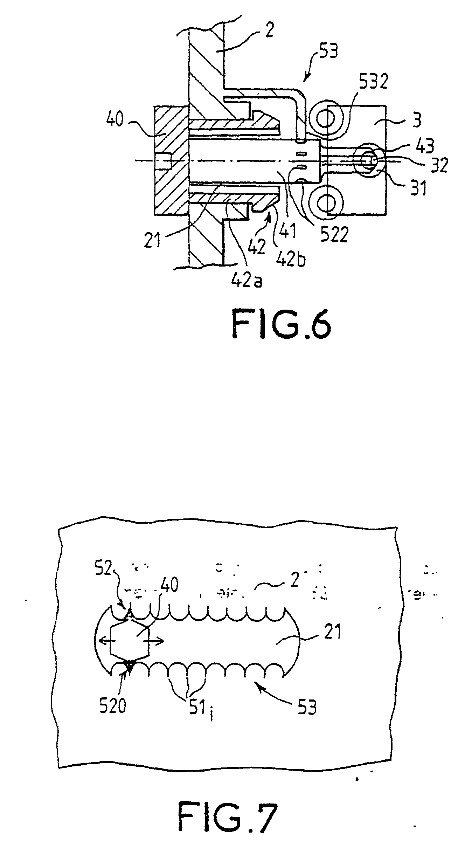

Les positions discrètes que peut prendre l'organe d'actionnement 4 permettent d'obtenir une succession de valeurs discrètes de résistance du potentiomètre. Ces positions sont obtenues par des moyens d'indexation à cran avec lesquels coopèrent l'organe d'actionnement 4. Ces moyens d'indexation 52, 53 à cran en décomposant en un premier moyen d'indexation 52 porté par l'organe d'actionnement 4 (figures 3a, 3b, et 3c) et en un second moyen d'indexation 53 (figures 4 et 5) fixe par rapport à l'appareil 10.

Le premier moyen d'indexation 52, solidaire de l'organe d'actionnement 4, est représenté sur les figures 3a, 3b, et 3c sous forme d'au moins un ergot 520 de forme trapézoïdale. Cet ergot est de préférence porté par une des pattes élastiques d'encliquetage 42, mais il est également possible de le placer ailleurs.

Dans l'exemple représenté, le second moyen d'indexation 53, fixe par rapport à l'appareil 10, est situé sur l'enveloppe 1 et plus précisément sur la face arrière de la paroi avant 2 de l'appareil 10. Il est formé d'une succession de crans ou encoches 51₁ à 51ₙ, qui ont sensiblement la même forme trapézoïdale que l'ergot 520. L'ergot 520 est destiné à venir se loger dans l'un des crans 51₁ à 51ₙ lorsque l'organe d'actionnement 4 prend l'une des positions discrètes désirées, et à passer de crans en crans lorsque l'on actionne l'organe d'actionnement 4. Les crans sont situés au bord de l'ouverture 21 de l'enveloppe 1 comme on le voit sur les figures 4 (vue en coupe de dessus) et 5 (vue par l'arrière, c'est-à-dire par l'intérieur de l'appareil, de la paroi frontale 2).

Dans l'exemple décrit, les crans 51₁ à 51ₙ sont aménagés sur la face intérieure de l'enveloppe 1 et ne sont pas visibles de l'extérieur de l'enveloppe 1. Ils peuvent être moulés dans l'enveloppe 1 si le matériau de l'enveloppe 1 s'y prête. On peut bien sûr envisager que les crans soient creusés sur la face extérieure de l'enveloppe 1. Le choix dépend de la position des premiers moyens d'indexation 52.

Le nombre de crans est au moins égal au nombre de positions discrètes 51₁ à 51ₙ souhaitées pour l'organe d'actionnement 4, donc au nombre de valeurs désirées pour le paramètre de réglage de l'appareil.

Pour que le passage de l'ergot d'un cran au suivant se fasse de manière franche et sûre, on prévoit que le premier moyen d'indexation 52 et/ou le second moyen d'indexation 53 soient élastiques. En plaçant l'ergot 520 sur les pattes élastiques 42a des moyens d'encliquetage 42 cette condition est remplie.

L'élasticité des pattes d'encliquetage, prévue pour permettre l'insertion à force puis le maintien de l'organe d'actionnement dans l'ouverture 21, sert en effet également à rappeler l'ergot 520 vers l'intérieur des crans, c'est-à-dire vers la périphérie de l'ouverture 21. La profondeur des crans est plus faible que le débattement élastique des pattes d'encliquetage, de sorte que l'ergot peut sortir des crans lorsqu'on tourne le bouton de commande. La forme trapézoïdale des crans et de l'ergot facilite la sortie de l'ergot hors d'un cran ainsi que sa pénétration dans un autre cran. De préférence, la surface d'appui disponible entre deux crans est suffisamment faible pour empêcher l'ergot de se stabiliser hors d'un cran.

Au lieu que le premier moyen d'indexation 52 soit formé d'un ergot et que le second moyen d'indexation 53 de plusieurs crans, il est possible d'envisager le contraire comme l'illustre la figure 6.

Le second moyen d'indexation 53 comporte maintenant un ergot 532, solidaire de l'enveloppe 1 et qui fait saillie à l'intérieur de l'enveloppe vers l'organe d'actionnement. Le premier moyen d'indexation 52 comporte une succession de crans 522 portés par la tige 41 de l'organe d'actionnement 4. L'ergot 532 présente une élasticité suffisante pour permettre son maintien élastique dans un cran, et sa sortie hors de ce cran.

Au lieu de prévoir au moins un ergot et une succession de crans, l'ergot passant de cran en cran, il serait possible de prévoir au moins un cran et une succession d'ergots, un des ergots venant se loger dans le cran selon la position discrète de l'organe d'actionnement 4. Ces ergots appartiennent soit au premier moyen d'indexation, soit au second moyen d'indexation et le cran respectivement soit au second moyen d'indexation, soit au premier moyen d'indexation. C'est alors le cran qui est formé sur un organe élastique qui le rappelle vers un ergot.

Dans l'exemple des figures précédentes, l'organe d'actionnement 4 est mobile en rotation mais son déplacement pourrait être une translation comme l'illustre la figure 7.

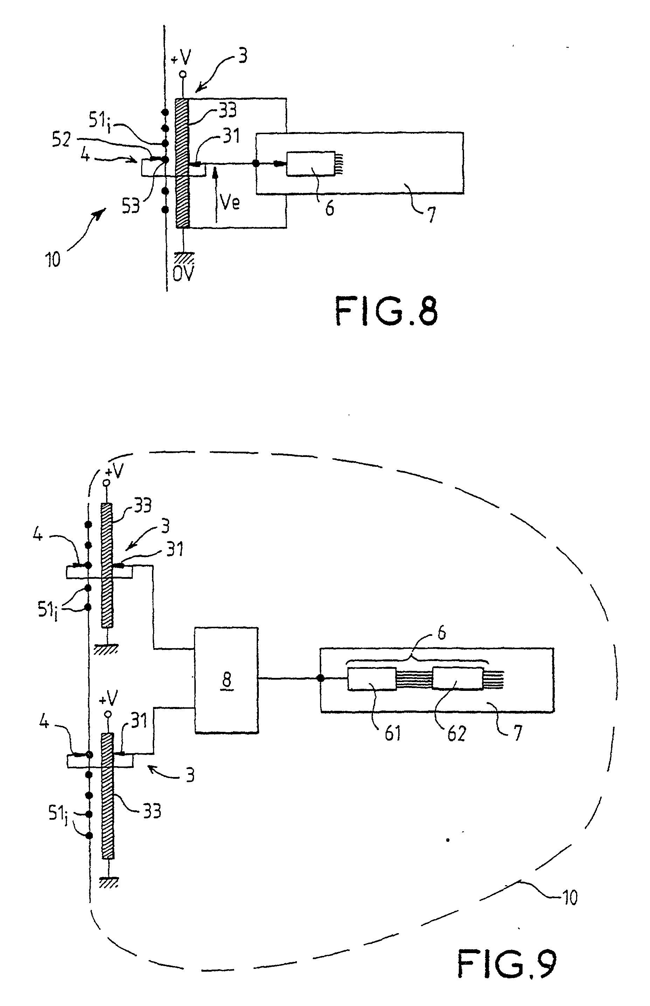

La figure 8 représente le principe de fonctionnement électrique de l'appareil.

Le potentiomètre 3 est schématisé par une résistance 33. Son curseur 31 se déplace et prend les différentes positions discrètes 51₁ sous la commande de son organe d'actionnement 4. Le potentiomètre est par exemple tout simplement alimenté par une tension V de sorte qu'une fraction de cette tension, variable de manière discrète, apparaît sur son curseur. Le potentiomètre pourrait aussi être monté dans un pont de résistances.

La tension analogique Ve présente sur le curseur est appliquée à l'entrée des circuits électroniques qui permettent à l'appareil d'exécuter les fonctions paramétrables pour lesquelles il est prévu. Ces circuits comportent essentiellement un dispositif de traitement 7 qui est constitué en pratique par un microcontrôleur programmé. Pour la réalisation de l'invention, les circuits électroniques doivent comporter des moyens de conversion analogique-numérique et d'interprétation 6, intégrés de préférence au microcontrôleur. Ces moyens de conversion analogique-numérique et d'interprétation 6 établissent un signal numérique de p bits, représentant l'une des N positions discrètes possibles du potentiomètre à indexation, et représentant donc l'une des valeurs souhaitées pour le paramètre réglé par ce potentiomètre. Ce signal numérique de p bits remplace le signal de p bits qui aurait été fourni dans la technique antérieure par un commutateur à p bits. II est directement utilisé par le dispositif de traitement 7 pour faire fonctionner l'appareil avec la valeur de paramètre sélectionné.

Dans le cas le plus simple, les moyens de conversion analogique-numérique et d'interprétation comportent un simple convertisseur analogique-numérique de p bits. Mais cela suppose que le potentiomètre soit bien précis, et bien linéaire, pour qu'il y ait une correspondance biunivoque, pour chaque position discrète du curseur, entre la position géométrique du curseur, et le signal de p bits qui en résulte. Si on veut utiliser un potentiomètre à bas coût, de dispersion peut être importante, alimenté par une tension qui n'est pas forcément très précise, soumis éventuellement à des contraintes climatiques, thermiques et mécaniques importantes, la correspondance biunivoque sera difficile à obtenir par un simple convertisseur analogique-numérique de p bits.

On préfère donc utiliser un convertisseur analogique-numérique de plus grande résolution, par exemple de p+m bits, et des moyens de décodage, l'ensemble du convertisseur et des moyens de décodage "constituant les moyens de conversion et d'interprétation 6 mentionnés ci-dessus. Les moyens de décodage font alors correspondre aux différentes valeurs possibles de la tension analogique, codées en numérique sur p+m bits, une valeur numérique unique codée sur p bits qui représente une position discrète à laquelle cette valeur de tension analogique est supposée correspondre. Il n'y a aucune nécessité d'ailleurs que la valeur unique codée sur p bits corresponde justement aux p poids forts de la valeur numérique codée sur p+m bits, la table de décodage pouvant être quelconque. En particulier, cette correspondance n'existera en général pas si le potentiomètre n'est pas suffisamment linéaire.

Les moyens de décodage peuvent être intégrés, de même que le convertisseur analogique-numérique, dans un microcontrôleur constituant l'essentiel des circuits 7. Ces moyens de décodage peuvent être constitués par une mémoire morte électriquement programmable. Les défauts éventuels des potentiomètres, ou l'adaptation de l'appareil à un autre potentiomètre, ou les changements de tension d'alimentation, peuvent être pris en compte en ayant une mémoire morte à plusieurs zones différentes, ou même en changeant le contenu de la mémoire morte.

Une seule liaison est nécessaire entre un potentiomètre à indexation déterminé et le microcontrôleur.

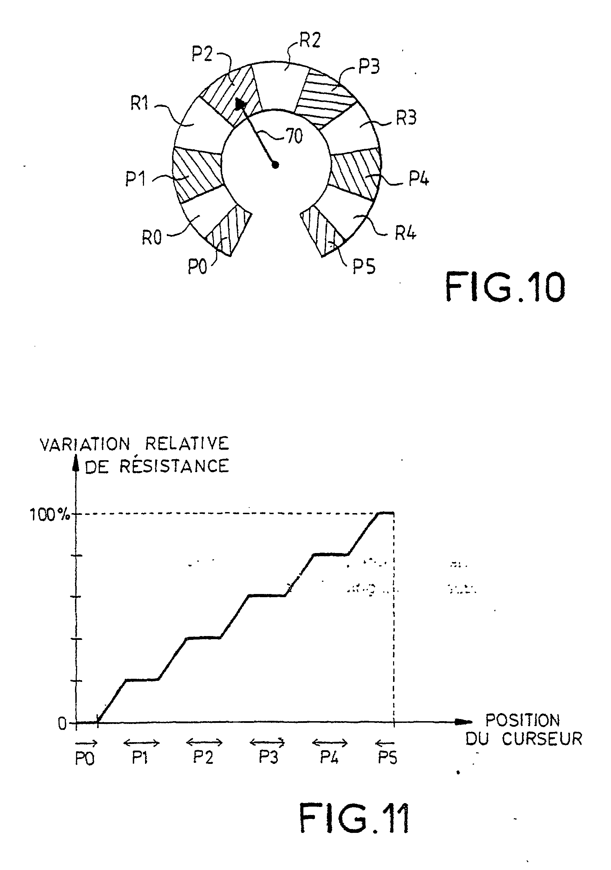

Si l'appareil possède plusieurs potentiomètres 3, on peut utiliser le même convertisseur analogique-numérique pour tous les potentiomètres, à condition d'intercaler un multiplexeur entre les potentiomètres et ce convertisseur. Ce multiplexeur 8 peut faire partie du microcontrôleur, auquel cas il faut que le microcontrôleur possède autant d'entrées que de potentiomètres. II peut aussi être extérieur au microcontrôleur et placé en amont de celui-ci, auquel cas, une seule liaison analogique est nécessaire entre la sortie du multiplexeur et le microcontrôleur, les différents potentiomètres étant reliés aux différentes entrées du multiplexeur 8 comme cela est représenté à la figure 9. Le convertisseur analogique-numérique est désigné par une référence 61 sur la figure 9, et il est suivi d'un moyen de décodage 62.

S'il y a en outre dans l'appareil un potentiomètre de réglage continu, non indexé, comme c'est le cas pour la minuterie représentée à la figure 1 qui possède un réglage continu de durée de temporisation à l'intérieur d'une gamme de durées sélectionnées, ce potentiomètre à réglage continu peut être connecté à travers le multiplexeur au même microcontrôleur (et en pratique au même convertisseur analogique-numérique). Le signal qui en résulte est exploité par l'appareil pour définir le réglage fin de durée.

La figure 10 représente schématiquement un mode de réalisation particulière de l'invention, dans lequel la piste résistive du potentiomètre, sur laquelle se déplace le curseur du potentiomètre (représenté par une flèche symbolique 70), se présente sous forme de plages résistives discontinues R0 à R4, séparées par des plages conductrices P0 à P5 (hachurées).

Chaque plage conductrice se situe à l'endroit d'une position discrète respective du curseur définie par les moyens d'indexation à cran (non représentés sur la figure 10).

Cette disposition particulière a pour but de diminuer les conséquences de l'incertitude sur la position exacte du curseur par rapport à la piste résistive lorsque le curseur est sur une position indexée, compte tenu de la dispersion de fabrication d'un appareil à l'autre.

En pratique, la piste résistive est une piste continue sur toute l'étendue de déplacement du curseur, mais elle est recouverte localement, à l'endroit des plages P0 à P5, par une couche conductrice qui court-circuite localement la piste résistive et lui confère donc une configuration discontinue. De la pâte d'argent peut être utilisée pour la couche conductrice.

L'allure de la variation relative de résistance du potentiomètre en fonction de la variation de position du curseur est alors celle de la figure 11 : la résistance varie par paliers.

L'utilisation de plages conductrices ayant globalement une longueur (le long de la piste) sensiblement égale à la longueur totale des plages résistives, voire même deux fois cette longueur paraît être un compromis satisfaisant.

On remarquera que si on impose la valeur de la résistance totale du potentiomètre (curseur en bout de piste) il faut augmenter la résistance de la piste par unité de longueur par rapport à ce qu'elle serait en l'absence de plages conductrices. Par exemple un potentiomètre prévu pour faire 200 kilohms au total devra être réalisé à partir d'une couche résistive correspondent théoriquement à un potentiomètre d'environ 500 kilohms.

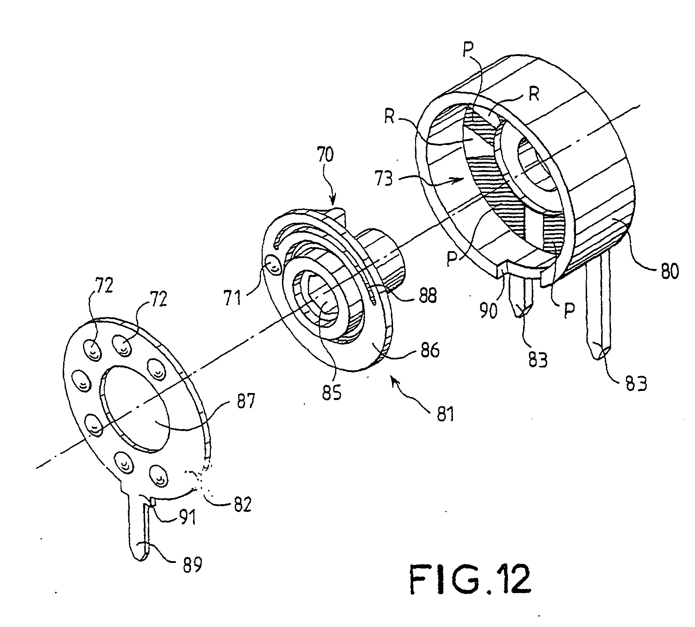

La figure 12 représente une vue éclatée d'un exemple pratique de réalisation dans lequel les moyens d'indexation à cran 71, 72 font partie du potentiomètre 3 lui-même et dans lequel la piste résistive R est rendue discontinue par l'utilisation de plages conductrices P recouvrant localement, à l'endroit des positions indexées du curseur 70 la piste résistive.

Le potentiomètre représenté comporte trois parties 80, 81, 82. La partie 80, à droite sur la figure est un boîtier qui contient au niveau de son fond la piste résistive 73 formée de plages résistives R discontinues séparées par des plages conductrices P. En vue de l'alimentation électrique du potentiomètre les deux extrémités de la piste résistive 73 sont reliées chacune à une patte conductrice 83 qui sort du boîtier. Dans l'exemple de la figure 12, les extrémités de la piste 73 sont situées au niveau de plages conductrices P.

La partie médiane 81 mobile en rotation vient se loger dans le boîtier.

Elle comporte une couronne 86 conductrice pourvue d'une partie en relief 70 qui forme le curseur et qui vient en contact avec la piste résistive 73 lorsque la partie médiane 81 est montée dans le boîtier 80. La partie en relief 70 est en forme de V dans l'exemple décrit.

Cette couronne 86 conductrice est montée autour d'un axe isolant 85 qui sert à l'actionnement en rotation du curseur 70. Lors du montage l'axe isolant 85 vient d'un côté en appui au fond du boîtier. De l'autre, l'axe 85 est accessible de l'extérieur du boîtier pour permettre l'actionnement de la couronne et donc du curseur 70. Sur la figure 12 l'axe 85 est creux et peut être actionné en rotation à l'aide d'un tournevis pour déplacer le curseur 70.

La dernière partie 82 est un couvercle que l'on solidarise au boîtier 80 pour le fermer.

Le couvercle 82 comporte une ouverture 87 pour laisser passer l'axe isolant 85. Les moyens d'indexation à cran 71, 72 sont constitués simplement par des bossages coopérant les uns avec les autres. Le premier moyen d'indexation 71 est formé au moins d'un bossage, porté par la couronne 86, en relief vers le couvercle 82 dans l'exemple décrit.

Le second moyen d'indexation 72 est formé de plusieurs bossages, portés par le couvercle 82, en creux vers la couronne 86. Un bossage 71 porté par la couronne 86 en relief vers le couvercle 82 vient se loger dans l'un des bossages 72 portés par le couvercle. Lorsque la couronne 86 est entraînée en rotation le bossage 71 passe de bossage 72 en bossage 72 et le curseur 70 de plages conductrices en plages conductrices.

Dans l'exemple, le nombre de bossages 72 correspond au nombre de positions discrètes souhaitées par l'organe d'actionnement. On peut bien sûr employer un bossage 71 en creux vers le couvercle 82 et des bossages 72 en relief vers la couronne 86.

Pour que le passage d'une position discrète à la suivante se fasse de manière franche et sûre, la couronne 86 portant le bossage 71 possède une certaine élasticité donnée par une fente 88 située au niveau du curseur 70.

Le couvercle 82 est conducteur et possède une patte 89 conductrice qui permet de recueillir la tension présente au niveau du curseur 70. Pour positionner correctement le couvercle 82 par rapport au boîtier 80 et l'empêcher de tourner, on peut prévoir que le couvercle 82 comporte au moins une languette 91 qui vient se loger dans une encoche 90 du boîtier 80.

## Revendications

1. Appareil électrique à au moins une fonction paramétrable, comportant au moins un potentiomètre (3) ayant un organe d'actionnement (4) pouvant prendre des positions (51₁ à 51ₙ), chaque position (51ᵢ) correspondant à une valeur souhaitée d'un paramètre, des moyens de conversion analogique-numérique et d'interprétation (6) recevant une tension analogique (Ve) délivrée par le potentiomètre (3), fonction de la position (51ᵢ) prise par l'organe d'actionnement (4) et délivrant un signal numérique représentatif de la position (51ᵢ) de l'organe d'actionnement (4) et donc de la valeur souhaitée pour le paramètre, ce signal numérique servant de signal de commande de paramétrage de l'appareil, **caractérisé en ce que** les positions que peut prendre l'organe d'actionnement sont des positions discrètes, l'organe d'actionnement (4) coopèrant avec des moyens d'indexation à cran (52, 53) qui matérialisent ces positions discrètes.

2. Appareil électrique selon la revendication 1, **caractérisé en ce que** les moyens de conversion analogique-numérique et d'interprétation (6) comportent un convertisseur analogique-numérique qui reçoit la tension analogique (Ve) et qui délivre le signal numérique représentatif de la position (51ᵢ) de l'organe d'actionnement (4).

3. Appareil électrique selon la revendication 1, **caractérisé en ce que** les moyens de conversion analogique-numérique et d'interprétation (6) comportent un convertisseur analogique-numérique (61) qui reçoit la tension analogique (Ve) et qui délivre un signal numérique intermédiaire à un dispositif de décodage (62), le dispositif de décodage (62) délivrant le signal numérique représentatif de la position (51ᵢ) de l'organe d'actionnement (4).

4. Appareil électrique selon la revendication 3, **caractérisé en ce que** le convertisseur (61) fournit un signal numérique codé sur p+m bits, et en ce que le dispositif de décodage (62) fournit un signal codé sur p bits à partir du signal codé sur p+m bits.

5. Appareil électrique selon l'une des revendications 2 à 4, comportant un dispositif de traitement (7) exploitant le signal numérique représentatif de la position (51ᵢ) de l'organe d'actionnement (4) pour faire exécuter à l'appareil une fonction avec un paramètre sélectionné, **caractérisé en ce que** le convertisseur analogique-numérique (6, 61) est intégré dans le dispositif de traitement (7).

6. Appareil électrique selon la revendication 5 , **caractérisé en ce que** le dispositif de décodage (62) est intégré dans le dispositif de traitement (7).

7. Appareil électrique selon l'une des revendications 1 à 6, comportant plusieurs potentiomètres (3) **caractérisé en ce qu'**un multiplexeur (8) est inséré entre les potentiomètres (3) et les moyens de conversion analogique-numérique et d'interprétation (6).

8. Appareil électrique selon l'une des revendications 1 à 7, **caractérisé en ce que** les moyens d'indexation (52, 53) comportent un premier moyen d'indexation (52) solidaire de l'organe d'actionnement (4) et un second moyen d'indexation (53) porté par une enveloppe (1) de l'appareil (10).

9. Appareil électrique selon la revendication 8, **caractérisé en ce que** le premier moyen d'indexation (52) et/ou le second moyen d'indexation (53) sont élastiques.

10. Appareil électrique selon l'une des revendications 8 ou 9, **caractérisé en ce que** l'un des moyens d'indexation (52) comporte au moins un ergot (520) et l'autre (53) plusieurs crans (51₁ à 51ₙ), l'ergot (520) venant se loger dans l'un des crans (51ᵢ).

11. Appareil électrique selon l'une des revendications 8 ou 9, **caractérisé en ce que** l'un des moyens d'indexation comporte plusieurs ergots et l'autre au moins un cran, le cran venant s'appliquer sur l'un des ergots.

12. Appareil électrique selon l'une des revendications 8 à 11, **caractérisé en ce que** l'organe d'actionnement (4) traverse l'enveloppe (1) de l'appareil par une ouverture (21) et comporte des moyens élastiques d'encliquetage (42) dans cette ouverture (21), et en ce que le premier moyen d'indexation (52) est porté par les moyens élastiques d'encliquetage (42).

13. Appareil électrique selon la revendication 12, **caractérisé en ce que** le second moyen d'indexation (53) est situé sur le bord de l'ouverture (21).

14. Appareil électrique selon l'une des revendications 1 à 7, **caractérisé en ce que** les moyens d'indexation (71, 72) font partie du potentiomètre.

15. Appareil électrique selon la revendication 14, **caractérisé en ce que** les moyens d'indexation (71, 72) sont des bossages qui coopèrent les uns avec les autres.

16. Appareil selon l'une des revendications 1 à 15, **caractérisé en ce que** le potentiomètre comporte une piste résistive qui se présente sous la forme de plages résistives (R0 à R4) discontinues séparées par des plages conductrices (P0 à P5).

17. Appareil selon la revendication 16, **caractérisé en ce que** les plages résistives (R0 à R4) discontinues sont formées d'une piste résistive continue recouverte localement par une couche conductrice.

18. Appareil selon l'une des revendications 1 à 17, **caractérisé en ce que** le paramètre est un mode opératoire de l'appareil parmi plusieurs modes possibles.

19. Appareil selon l'une des revendications 1 à 17, **caractérisé en ce que** le paramètre est une gamme de valeurs d'un autre paramètre, parmi plusieurs gammes possibles.

20. Appareil selon l'une des revendications 18 et 19, **caractérisé en ce qu'**il constitue une minuterie ayant au moins un potentiomètre à indexation pour définir un mode opératoire et/ou un potentiomètre à indexation pour définir une gamme de durées de temporisation.

## Patentansprüche

1. Elektrisches Gerät, das wenigstens eine parametrisierbare Funktion besitzt, mit wenigstens einem Potentiometer (3), das ein Betätigungselement (4) besitzt, das Positionen (51₁ bis 51ₙ) einnehmen kann, wovon jede (51ᵢ) einem gewünschten Wert eines Parameters entspricht, und mit Analog/Digital-Umsetzungs- und Interpretationsmitteln (6), die eine vom Potentiometer (3) in Abhängigkeit von der vom Betätigungselement (4) eingenommenen Position (51ᵢ) gelieferte analoge Spannung (Ve) empfangen und ein digitales Signal ausgeben, das die Position (51ᵢ) des Betätigungselements (4) und daher den gewünschten Wert für den Parameter darstellt, wobei dieses digitale Signal als Steuersignal für die Parametrisierung des Geräts dient, **dadurch gekennzeichnet, daß** die Positionen, die das Betätigungselement einnehmen kann, diskrete Positionen sind, wobei das Betätigungselement (4) mit Rasten-Indexierungsmitteln (52, 53) zusammenwirkt, die diese diskreten Positionen gegenständlich darstellen.

2. Elektrisches Gerät nach Anspruch 1, **dadurch gekennzeichnet, daß** die Analog/Digital-Umsetzungs- und Interpretationsmittel (6) einen Analog/Digital-Umsetzer enthalten, der die analoge Spannung (Ve) empfängt und das die Position (51ᵢ) des Betätigungselements (4) darstellende digitale Signal ausgibt.

3. Elektrisches Gerät nach Anspruch 1, **dadurch gekennzeichnet, daß** die Analog/Digital-Umsetzungs- und Interpretationsmittel (6) einen Analog/Digital-Umsetzer (61) umfassen, der die analoge Spannung (Ve) empfängt und ein digitales Zwischensignal an eine Decodierungsvorrichtung (62) ausgibt, die ihrerseits das die Position (51ᵢ) des Betätigungselements (4) darstellende digitale Signal ausgibt.

4. Elektrisches Gerät nach Anspruch 3, **dadurch gekennzeichnet, daß** der Umsetzer (61) ein mit p + m Bits codiertes digitales Signal ausgibt und daß die Decodierungsvorrichtung (62) anhand des mit p + m Bits codierten Signals ein mit p Bits codiertes Signal ausgibt.

5. Elektrisches Gerät nach einem der Ansprüche 2 bis 4, das eine Verarbeitungsvorrichtung (7) enthält, die das die Position (51ᵢ) des Betätigungselements (4) darstellende digitale Signal auswertet, um für das Gerät eine Funktion mit einem ausgewählten Parameter auszuführen, **dadurch gekennzeichnet, daß** der Analog/Digital-Umsetzer (6, 61) in die Verarbeitungsvorrichtung (7) integriert ist.

6. Elektrisches Gerät nach Anspruch 5, **dadurch gekennzeichnet, daß** die Decodierungsvorrichtung (62) in die Verarbeitungsvorrichtung (7) integriert ist.

7. Elektrisches Gerät nach einem der Ansprüche 1 bis 6, das mehrere Potentiometer (3) umfaßt, **dadurch gekennzeichnet, daß** zwischen die Potentiometer (3) und die Analog/Digital-Umsetzungs- und Interpretationsmittel (6) ein Multiplexer (8) geschaltet ist.

8. Elektrisches Gerät nach einem der Ansprüche 1 bis 7, **dadurch gekennzeichnet, daß** die Indexierungsmittel (52, 53) ein mit dem Betätigungselement (4) fest verbundenes erstes Indexierungsmittel (52) und ein von einem Gehäuse (1) des Geräts (10) getragenes zweites Indexierungsmittel (53) umfassen.

9. Elektrisches Gerät nach Anspruch 8, **dadurch gekennzeichnet, daß** das erste Indexierungsmittel (52) und/oder das zweite Indexierungsmittel (53) elastisch sind.

10. Elektrisches Gerät nach einem der Ansprüche 8 oder 9, **dadurch gekennzeichnet, daß** eines der Indexierungsmittel (52) wenigstens einen Vorsprung (520) und das andere (53) mehrere Rasten (51₁ bis 51ₙ) umfaßt, wobei der Vorsprung (520) von einer der Rasten (51ᵢ) aufgenommen wird.

11. Elektrisches Gerät nach einem der Ansprüche 8 oder 9, **dadurch gekennzeichnet, daß** eines der Indexierungsmittel mehrere Vorsprünge umfaßt und das andere wenigstens eine Raste umfaßt, wobei die Raste auf einen der Vorsprünge angewendet wird.

12. Elektrisches Gerät nach einem der Ansprüche 8 bis 11, **dadurch gekennzeichnet, daß** das Betätigungselement (4) das Gehäuse (1) des Geräts durch eine Öffnung (21) durchquert und elastische Einrastmittel (42) in dieser Öffnung (21) aufweist und daß das erste Indexierungsmittel (52) von den elastischen Einrastmitteln (42) getragen wird.

13. Elektrisches Gerät nach Anspruch 12, **dadurch gekennzeichnet, daß** sich das zweite Indexierungsmittel (53) am Rand der Öffnung (21) befindet.

14. Elektrisches Gerät nach einem der Ansprüche 1 bis 7, **dadurch gekennzeichnet, daß** die Indexierungsmittel (71, 72) einen Teil des Potentiometers bilden.

15. Elektrisches Gerät nach Anspruch 14, **dadurch gekennzeichnet, daß** die Indexierungsmittel (71, 72) Höcker sind, die zusammenwirken.

16. Gerät nach einem der Ansprüche 1 bis 15, **dadurch gekennzeichnet, daß** das Potentiometer eine Bahn mit ohmschem Widerstand aufweist, die die Form diskontinuierlicher ohmscher Bereiche (R0 bis R4) besitzt, die durch leitende Bereiche (P0 bis P5) getrennt sind.

17. Gerät nach Anspruch 16, **dadurch gekennzeichnet, daß** die diskontinuierlichen ohmschen Bereiche (R0 bis R4) aus einer kontinuierlichen ohmschen Bahn gebildet sind, die lokal durch eine leitende Schicht bedeckt ist.

18. Gerät nach einem der Ansprüche 1 bis 17, **dadurch gekennzeichnet, daß** der Parameter eine Betriebsart des Geräts von mehreren möglichen Betriebsarten ist.

19. Gerät nach einem der Ansprüche 1 bis 17, **dadurch gekennzeichnet, daß** der Parameter ein Wertebereich von mehreren möglichen Bereichen eines weiteren Parameters ist.

20. Gerät nach einem der Ansprüche 18 und 19, **dadurch gekennzeichnet, daß** es ein Uhrwerk bildet, das wenigstens ein Indexierungspotentiometer für die Definition einer Betriebsart und/oder ein Indexierungspotentiometer für die Definition eines Bereichs von Zeitdauern besitzt.

## Claims

1. Electrical apparatus having at least one parametrizable function, comprising at least one potentiometer (3) having an actuation member (4), able to take positions (51₁ to 51ₙ), each position (51ᵢ) corresponding to a desired value of a parameter, means of analogue/digital conversion and interpretation (6) receiving an analogue voltage (Ve) delivered by the potentiometer (3), dependent on the position (51ᵢ) taken by the actuation member (4) and delivering a digital signal representative of the position (51ᵢ) of the actuation member (4) and hence of the desired value of the parameter, this digital signal serving as parametrization control signal for the apparatus, **characterized in that** the positions which the actuation member can take are discrete positions, the actuation member (4) cooperating with notched indexation means (52, 53), which physically define these discrete positions.

2. Electrical apparatus according to Claim 1, **characterized in that** the means of analogue/digital conversion and interpretation (6) comprise an analogue/digital converter which receives the analogue voltage (Ve) and which delivers the digital signal representative of the position (51ᵢ) of the actuation member (4).

3. Electrical apparatus according to Claim 1, **characterized in that** the means of analogue/digital conversion and interpretation (6) comprise an analogue/digital converter (61) which receives the analogue voltage (Ve) and which delivers an intermediate digital signal to a decoding device (62), the decoding device (62) delivering the digital signal representative of the position (51ᵢ) of the actuation member (4).

4. Electrical apparatus according to Claim 3, **characterized in that** the converter (61) provides a digital signal coded on p+m bits, and in that the decoding device (62) provides a signal coded on p bits from the signal coded on p+m bits.

5. Electrical apparatus according to one of Claims 2 to 4, comprising a processing device (7) utilizing the digital signal representative of the position (51ᵢ) of the actuation member (4) so as to have the apparatus execute a function with a selected parameter, **characterized in that** the analogue/digital converter (6, 61) is integrated into the processing device (7).

6. Electrical apparatus according to Claim 5, **characterized in that** the decoding device (62) is integrated into the processing device (7).

7. Electrical apparatus according to one of Claims 1 to 6, comprising several potentiometers (3), **characterized in that** a multiplexer (8) is inserted between the potentiometers (3) and the means of analogue/digital conversion and interpretation (6).

8. Electrical apparatus according to one of Claims 1 to 7, **characterized in that** the indexation means (52, 53) comprise a first indexation means (52) integral with the actuation member (4) and a second indexation means (53) carried by a casing (1) of the apparatus (10).

9. Electrical apparatus according to Claim 8, **characterized in that** the first indexation means (52) and/or the second indexation means (53) are elastic.

10. Electrical apparatus according to one of Claims 8 or 9, **characterized in that** the one of the indexation means (52) comprises at least one lug (520) and the other (53) several notches (51₁ to 51ₙ), the lug (520) becoming housed in one of the notches (51ᵢ).

11. Electrical apparatus according to one of Claims 8 or 9, **characterized in that** one of the indexation means comprises several lugs and the other at least one notch, the notch becoming applied to one of the lugs.

12. Electrical apparatus according to one of Claims 8 to 11, **characterized in that** the actuation member (4) passes through the casing (1) of the apparatus via an opening (21) and comprises elastic means of snap-fastening (42) into this opening (21), and in that the first indexation means (52) is carried by the elastic means of snap-fastening (42).

13. Electrical apparatus according to Claim 12, **characterized in that** the second indexation means (53) is situated on the edge of the opening (21).

14. Electrical apparatus according to one of Claims 1 to 7, **characterized in that** the indexation means (71, 72) form part of the potentiometer.

15. Electrical apparatus according to Claim 14, **characterized in that** the indexation means (71, 72) are bosses which cooperate with one another.

16. Apparatus according to one of Claims 1 to 15, **characterized in that** the potentiometer comprises a resistive track which takes the form of discontinuous resistive lands (R0 to R4) separated by conductive lands (P0 to P5).

17. Apparatus according to Claim 16, **characterized in that** the discontinuous resistive lands (R0 to R4) are formed by a continuous resistive track covered locally with a conductive layer.

18. Apparatus according to one of Claims 1 to 17, **characterized in that** the parameter is one operational mode of the apparatus from among several possible modes.

19. Apparatus according to one of Claims 1 to 17, **characterized in that** the parameter is a range of values of another parameter, from among several possible ranges.

20. Apparatus according to one of Claims 18 and 19, **characterized in that** it constitutes a timer having at least one potentiometer with indexation so as to define an operational mode and/or a potentiometer with indexation so as to define a range of timing durations.
